# FASCICULE DE BREVET EUROPEEN

(11) **EP 3 482 056 B1**
(45) Date de publication et mention de la délivrance du brevet: **02.09.2020**
(21) Numéro de dépôt: 17735212.7
(22) Date de dépôt: 15.06.2017
(51) Int. Cl.: F02D 41/02, F02D 41/10, F02D 41/00, F01N 3/20

(54) **GESTION D'UN FONCTIONNEMENT TRANSITOIRE D'UN MOTEUR DE VEHICULE**
MANAGEMENT VON TRANSIENTEM BETRIEB FÜR KRAFTFAHRZEUGE
MOTOR VEHICLE TRANSIENT-OPERATION MANAGEMENT

(30) Priorité: 05.07.2016 FR 1656399
(43) Date de publication de la demande: 15.05.2019
(73) Titulaire: PSA Automobiles S.A., 78300 Poissy (FR)
(72) Inventeur: DENYS, Fabien, 92500 RUEIL MALMAISON (FR)
(86) Numéro de dépôt international: PCT/FR2017/051549
(87) Numéro de publication internationale: WO 2018/007704

(56) Documents cités:
- EP-A1- 2 211 033
- EP-A2- 1 431 533
- WO-A1-2012/047191
- DE-A1-102015 107 072

## Description

La présente invention concerne de manière générale un procédé de gestion d'un groupe moto propulseur de véhicule, pendant une phase transitoire de changement de régime et/ou de charge. En particulier, le procédé concerne un procédé de gestion d'un moteur thermique diesel monté sur un véhicule automobile.

Il est connu dans l'art antérieur des véhicules équipés d'une vanne de recyclage des gaz d'échappement, et de piloter cette vanne en fonction de plusieurs paramètres, comme décrit dans le document US20130261930 Cependant, ce document ne donne aucune solution pour réduire encore les émissions de certaines espèce gazeuses, en particulier les oxydes d'azote, lors de certaines phases transitoires du fonctionnement du moteur.

EP 1 431 533 divulgue un système avec recyclage des gaz d'échappement dans lequel le taux en gaz recyclés est accru lors d'une phase d'augmentation de charge pour limiter les émissions d'oxyde d'azote alors que la température trop basse des gaz d'échappement empêche un fonctionnement optimal de l'unité de traitement des gaz d'échappement par réduction catalytique sélective des oxydes d'azote.

EP 2 211 033 divulgue un autre exemple d'un tel système.

Dans WO 2012/047191, les émissions d'oxyde d'azote sont limitées lors d'une phase d'augmentation de charge par un contrôle approprié des actuateurs moteur tels que le moment d'injection, l'ouverture de la vanne papillon ou le taux en gaz d'échappement recyclés.

Quant à DE10 2015 107072, il y est question de l'accélération de la hausse de la température des gaz d'échappement par la réduction de l'admission en air frais, et l'activation recyclage des gaz d'échappement et du turbocompresseur.

Un but de la présente invention est de répondre aux inconvénients de l'art antérieur mentionnés ci-dessus et en particulier, tout d'abord, de proposer un procédé de gestion d'un fonctionnement transitoire d'un groupe motopropulseur thermique de véhicule équipé d'un système d'admission en air frais et/ou en gaz d'échappement recyclés qui permette de réduire les émissions d'oxydes d'azote.

Pour cela un premier aspect de l'invention concerne un procédé de gestion d'un fonctionnement transitoire d'un groupe motopropulseur thermique diesel à boite de vitesse manuelle de véhicule équipé d'un système d'admission en air frais et/ou en gaz d'échappement recyclés, comprenant les étapes consistant à :
- détecter une demande d'augmentation de charge et/ou de régime,
- augmenter un débit d'air d'admission du groupe motopropulseur pour satisfaire la demande d'augmentation de charge et/ou de régime, et dans lequel le débit d'air est augmenté en priorisant une admission de gaz d'échappement recyclés en fonction :
   - d'un niveau de liquide précurseur d'un réducteur d'oxydes d'azote dans un réservoir de stockage du véhicule, et/ou
   - d'une température d'une unité de traitement des gaz d'échappement du véhicule par réduction catalytique sélective des oxydes d'azote, et/ou
   - d'un état d'amorçage d'une unité de traitement des gaz d'échappement par oxydation catalytique. Le procédé peut ainsi être installé et mis en œuvre dans un superviseur global et ce dernier, en fonction des paramètres énumérés ci-dessus, va décider de prioriser ou non une admission en gaz d'échappement recyclés. Ce système commun à plusieurs véhicules va permettre de s'adapter aux spécificités de chaque véhicule pour gérer au mieux le recyclage des gaz d'échappement pendant les phases transitoires pour réduire les émissions d'oxydes d'azotes (NO, NO₂, ...).

Avantageusement, un fonctionnement transitoire est une phase de fonctionnement pendant laquelle au moins le couple délivré par le moteur augmente et/ou passe d'une première à une deuxième valeur.

Avantageusement, un fonctionnement transitoire est une phase de fonctionnement pendant laquelle le régime ou la vitesse de rotation du moteur augmente et/ou passe d'une première à une deuxième valeur.

Avantageusement, le débit d'air est augmenté en priorisant une admission d'air frais ou de gaz d'échappement recyclés en fonction :
- du type de groupe motopropulseur, et
- d'un niveau de liquide précurseur d'un réducteur d'oxydes d'azote dans un réservoir de stockage du véhicule, et
- d'une température d'une unité de traitement des gaz d'échappement du véhicule par réduction catalytique sélective des oxydes d'azote, et
- d'un état d'amorçage d'une unité de traitement des gaz d'échappement par oxydation catalytique. Les quatre paramètres sont cumulatifs pour gérer la priorisation de l'admission de gaz d'échappement recyclés ou non. En d'autres termes, le superviseur prend en compte tous les paramètres pour décider s'il est avantageux d'ouvrir la vanne de recyclage des gaz d'échappement (opérateur booléen "ET").

Avantageusement, le débit d'air est augmenté en priorisant une admission de gaz d'échappement recyclés si le groupe motopropulseur est du type à boîte de vitesse manuelle. Les régimes transitoires avec ce type de boîte sont pilotés par le conducteur et ne sont donc pas conformés pour limiter les émissions d'oxydes d'azotes. Il est donc avantageux de prévoir une admission de gaz d'échappement recyclés.

Avantageusement, le débit d'air est augmenté en priorisant une admission de gaz d'échappement recyclés si le niveau de liquide précurseur d'un réducteur d'oxydes d'azote dans le réservoir de stockage du véhicule est inférieur à un niveau prédéterminé. Cette mise en œuvre permet de limiter l'émission d'oxydes d'azote par le recyclage et de limiter l'utilisation de liquide précurseur d'un réducteur des oxydes d'azote (liquide AdBlue® par exemple, avec 32.5% d'urée) pour pouvoir gagner un point de ravitaillement sans vider complètement le réservoir de stockage. On peut envisager d'inviter l'utilisateur à recharger le réservoir.

Avantageusement, le débit d'air est augmenté en priorisant une admission de gaz d'échappement recyclés si la température de l'unité de traitement des gaz d'échappement à réduction catalytique sélective est inférieure à une température prédéterminée, telle que 200°C. En dessous de cette température prédéterminée, le traitement des oxydes d'azote par l'unité de traitement des gaz d'échappement à réduction catalytique sélective n'est pas optimal, il est donc utile de prioriser une admission de gaz d'échappement recyclés, pour compenser le traitement jusqu'à un moment où l'unité de traitement des gaz d'échappement à réduction catalytique sélective pourra traiter les oxydes d'azote de manière optimale. En particulier, ce moment est atteint quand l'unité de traitement des gaz d'échappement à réduction catalytique sélective arrive à la température prédéterminée, qui correspond à une capacité de stockage d'ammoniac maximale.

Avantageusement, le procédé de gestion comprend une étape de mesure de température en un point particulier d'une ligne d'échappement du véhicule, et comprend une étape de correction de la température mesurée, en fonction d'une localisation de l'unité de traitement des gaz d'échappement à réduction catalytique sélective le long de la ligne d'échappement par rapport à une localisation du point particulier le long de la ligne d'échappement, pour déterminer si la température de l'unité de traitement des gaz d'échappement à réduction catalytique sélective est inférieure à la température prédéterminée. En fonction de l'architecture du véhicule ou de sa ligne d'échappement, de l'unité de traitement des gaz d'échappement à réduction catalytique sélective n'est pas toujours au même endroit. L'invention propose donc une correction de la température mesurée pour pointer sur la température adéquate.

Avantageusement, le débit d'air est augmenté en priorisant une admission de gaz d'échappement recyclés si l'unité de traitement des gaz d'échappement du véhicule par oxydation catalytique est amorcée. Il est important de ne pas activer la fonction de priorisation en gaz d'échappement recyclés lorsque le catalyseur est en phase d'amorçage, car les niveaux de d'hydrocarbure imbrûlés et de monoxyde de carbone deviennent très importants. Il est donc préférable d'attendre que le catalyseur soit amorcé pour autoriser la fonction de priorisation en gaz d'échappement recyclés.

Avantageusement, l'unité de traitement des gaz d'échappement du véhicule par oxydation catalytique est une unité de traitement des gaz d'échappement diesel par oxydation catalytique, et le débit d'air est augmenté en priorisant une admission de gaz d'échappement recyclés si une température de l'unité de traitement des gaz d'échappement diesel par oxydation catalytique est supérieure à une température d'amorçage, telle que 150°C.

Avantageusement, la température mesurée est également utilisée et éventuellement corrigée en fonction d'une localisation de l'unité de traitement des gaz d'échappement diesel par oxydation catalytique le long de la ligne d'échappement par rapport à une localisation du point particulier le long de la ligne d'échappement, pour déterminer si la température de l'unité de traitement des gaz d'échappement diesel par oxydation catalytique est supérieure à la température d'amorçage.

Avantageusement, l'étape d'augmentation du débit d'air en priorisant une admission de gaz d'échappement recyclés est effectuée en ouvrant une vanne de recyclage de gaz d'échappement à plus de 75% de son ouverture maximum, et de préférence en ouvrant la vanne de recyclage de gaz d'échappement à son ouverture maximum.

Avantageusement, le débit d'air d'admission est également augmenté en fonction d'une cartographie prédéterminée en fonction du régime et/ou de la charge du moteur.

Avantageusement, l'augmentation du débit d'air en priorisant une admission de gaz d'échappement recyclés comprend une étape ou consiste en une étape de pilotage actif d'une vanne de recyclage de gaz d'échappement en suivant un gabarit ou une cartographie basé(e) sur l'un des paramètres vitesse de rotation du moteur, charge ou couple du moteur, température d'air, pression d'air. En d'autres termes, lors de la priorisation de gaz d'échappement à l'admission, la vanne de recyclage n'est pas pilotée pour fournir un complément de débit d'air d'admission, suivant une boucle de réaction qui compare une différence entre le débit d'air frais et un débit théorique à atteindre. L'invention propose au contraire d'atteindre l'objectif de débit d'air d'admission d'abord en pilotant en premier lieu la vanne de recyclage, ce qui permet de maximiser la quantité de gaz d'échappement recyclés à l'admission et donc de diminuer les émissions d'oxydes d'azote.

Un second aspect de l'invention est un véhicule automobile comportant un groupe motopropulseur thermique équipé d'un système d'admission en air frais et/ou en gaz d'échappement recyclés, et dont le fonctionnement transitoire du groupe motopropulseur est géré par le procédé selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue schématique d'un moteur de véhicule ;
- la figure 2 représente un diagramme de gestion du moteur de la figure 1 selon le procédé de l'invention
- la figure 3 représente un exemple de phase transitoire lors d'une demande d'augmentation de couple sur un moteur avec et sans le procédé de gestion selon l'invention.

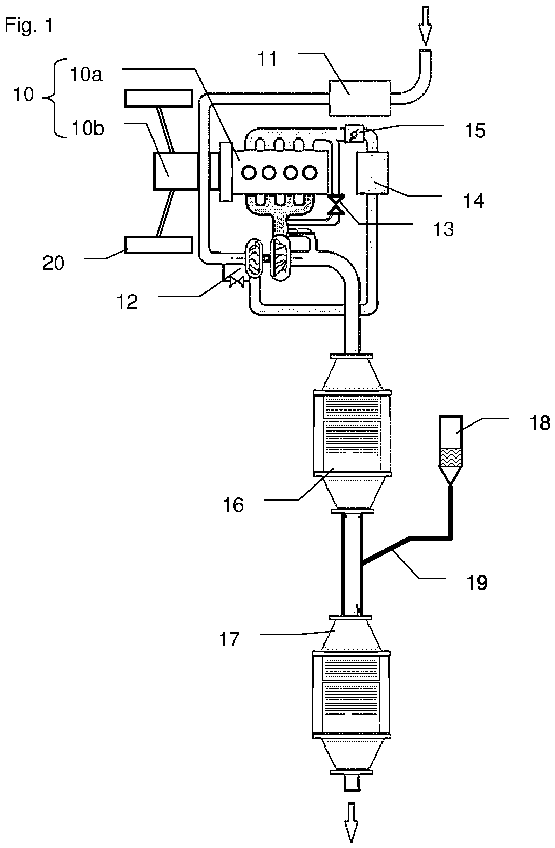

La figure 1 représente un groupe motopropulseur 10 comprenant un moteur thermique 10a accouplé à une boite de vitesse 10b pour transmettre la puissance aux roues motrices 20 du véhicule, et équipé :
- d'un système d'admission avec un filtre à air 11, un turbocompresseur 12, un refroidisseur d'air 14 et un volet papillon 15, et
- d'un système d'échappement avec une vanne 13 de recyclage de gaz d'échappement, le turbocompresseur 12, une unité de traitement des gaz d'échappement 16 par oxydation catalytique, et une unité de traitement des gaz d'échappement 17 par réduction sélective des oxydes d'azote.

Afin de correctement traiter les oxydes d'azote par réduction sélective au passage de l'unité de traitement des gaz d'échappement 17, il est prévu d'injecter un liquide précurseur d'un réducteur des oxydes d'azotes dans la ligne d'échappement avec une ligne d'injection 19, qui prélève le liquide précurseur (tel qu'un mélange d'eau et d'urée) dans un réservoir 18.

Lors du fonctionnement du moteur, la vanne 13 peut être ouverte ou partiellement ouverte pour recycler des gaz d'échappement afin de limiter les émissions d'oxydes d'azote. En effet, réintroduire des gaz d'échappement à l'admission du moteur thermique 10a réduit la quantité d'oxygène et augmente la capacité thermique des gaz dans les chambres de combustion du moteur thermique 10A, ce qui limite la température de combustion et la formation d'oxydes d'azote.

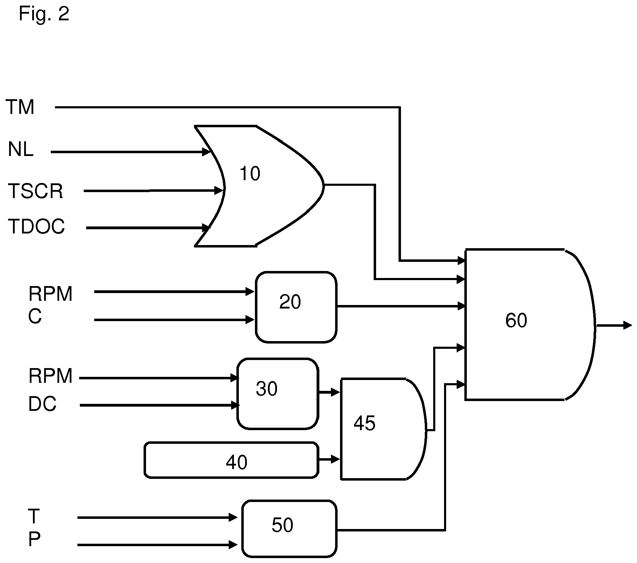

La figure 2 représente un diagramme montrant les paramètres de décision pour piloter la vanne 13, et donc la quantité de gaz d'échappement recyclés à l'admission du moteur 10a.

Le diagramme représente les paramètres considérés par le procédé de l'invention qui peut être mis en œuvre par un superviseur central du véhicule.

Un des buts du procédé est de gérer l'ouverture de la vanne 13 afin de prioriser une alimentation en air frais (vanne 13 fermée) ou en gaz d'échappement recyclés (vanne 13 ouverte ou partiellement ouverte), lors des changements de charge ou de régimes demandés par le conducteur du véhicule.

A cet effet, un premier paramètre pris en compte pour l'activation ou non de la fonction de priorisation de l'alimentation en gaz d'échappement recyclés est le type TM de boite de vitesse 10b du groupe motopropulseur 10. En effet, si la boite de vitesse 10b est du type manuelle, alors il est décidé de prioriser l'alimentation du moteur 10a en gaz d'échappement recyclés lors des demandes d'augmentation de couple et/ou de régime moteur. Cette donnée est entrée dans un bloc de décision booléen 60 du type "ET", qui permet de commander l'ouverture de la vanne 13.

Ensuite, le procédé priorise l'alimentation du moteur 10a en gaz d'échappement recyclés lors des demandes d'augmentation de couple et/ou de régime moteur lorsque :
- NL, qui est un niveau de liquide précurseur d'un réducteur d'oxydes d'azote dans le réservoir 18 de stockage du véhicule, passe en dessous d'un niveau prédéterminé, et/ou lorsque
- TSCR, qui est une température de l'unité de traitement des gaz d'échappement 17 du véhicule par réduction catalytique sélective des oxydes d'azote, est inférieure à une température de 200°C par exemple, indiquant que l'unité de traitement des gaz d'échappement 17 n'est pas encore à température idéale de fonctionnement, et/ou lorsque
- TDOC, qui est une température de l'unité de traitement des gaz d'échappement 16 par oxydation catalytique, est supérieure à une température d'amorçage de 150°C par exemple, indiquant que l'unité de traitement des gaz d'échappement 16 par oxydation catalytique est assez chaude pour oxyder efficacement les hydrocarbures imbrûlés et/ou le monoxyde de carbone.

Tous ces paramètres sont donc entrés dans une unité logique 10' de type booléen "OU" et entrent ensuite dans le bloc de décision booléen 60 du type "ET".

On peut prendre la température de la ligne d'échappement en un point particulier et corriger cette température en fonction du véhicule pour obtenir la température l'unité de traitement des gaz d'échappement 16 par oxydation catalytique et/ou de l'unité de traitement des gaz d'échappement 17 par réduction catalytique sélective.

De manière classique, le pilotage de la vanne 13 peut aussi être réalisé selon une cartographie embarquée dans une unité 20, qui prend en compte en entrée une vitesse de rotation du moteur RPM et un couple C.

On peut également envisager de piloter la vanne 13 avec une cartographie embarquée dans une unité 30 en prenant en compte une demande (ou consigne) de couple DC, la vitesse de rotation du moteur RPM, et un ordre de prise en compte de l'activation de la prise en compte de consigne couple par une unité d'activation 40 de cette prise en compte, en entrée d'une unité logique 45, qui met en œuvre un opérateur booléen de type "ET".

Enfin, une cartographie embarquée dans une unité 50, permet de prendre en compte en entrée la température d'air T, et la pression d'air P.

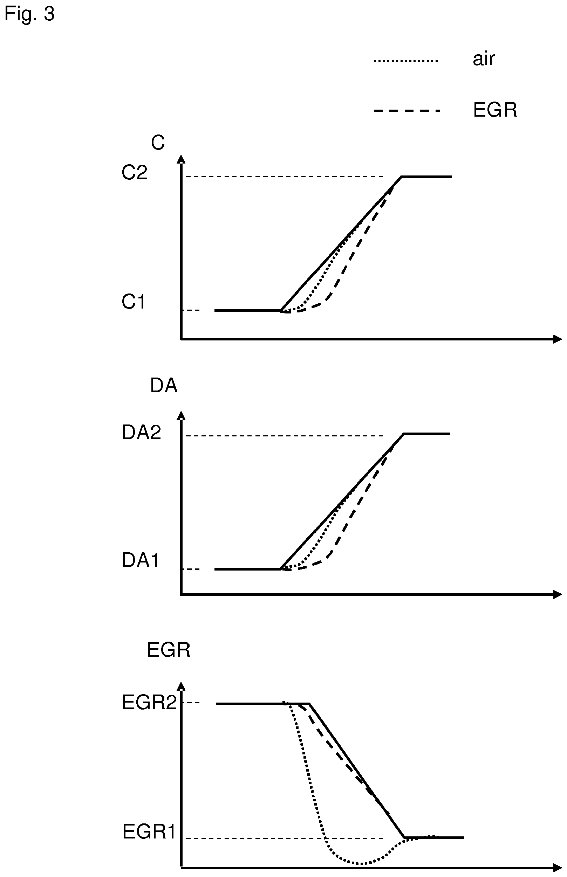

La figure 3 représente une demande d'augmentation de la valeur de couple C délivré par le moteur 10a.

Les courbes en traits continus montrent respectivement l'évolution de la consigne de couple C, du débit d'air DA et du taux de recyclage de gaz d'échappement EGR au cours du temps. Les courbes en petits pointillés montrent les résultats si une admission en air frais est priorisée, et les courbes en gros pointillés montrent l'évolution si une admission en gaz d'échappement recyclés est priorisée.

On constate sur le troisième graphe, celui relatif au taux de recyclage EGR, que la courbe classique priorisant l'air frais est bien au dessous de la courbe montrant une priorisation d'admission de gaz d'échappement recyclés selon l'invention, pendant la phase d'augmentation de couple. On peut conclure que tant que la courbe montrant le priorisation d'admission de gaz d'échappement recyclés est au dessus de la courbe priorisant l'air frais, moins d'oxydes d'azote sont générés, notamment car le mélange d'admission est appauvri en oxygène, et présente une capacité thermique supérieure qui limite la température de combustion.

On comprendra que diverses modifications et/ou améliorations évidentes pour l'homme du métier peuvent être apportées aux différents modes de réalisation de l'invention décrits dans la présente description sans sortir du cadre de l'invention, ce cadre étant défini par les revendications telles qu'exposées ci-après.

## Revendications

1. Procédé de gestion d'un fonctionnement transitoire d'un groupe motopropulseur (10) thermique diesel à boite de vitesse manuelle de véhicule équipé d'un système d'admission en air frais et en gaz d'échappement recyclés, d'une unité de traitement (17) des gaz d'échappement par réduction catalytique sélective des oxydes d'azote et d'une unité de traitement (16) des gaz d'échappement par oxydation catalytique, comprenant les étapes consistant à :
- détecter une demande d'augmentation de charge et/ou de régime,
- augmenter un débit d'air d'admission du groupe motopropulseur (10) pour satisfaire la demande d'augmentation de charge et/ou de régime, et dans lequel le débit d'air est augmenté en priorisant une admission de gaz d'échappement recyclés en fonction au moins :
- d'un niveau de liquide précurseur d'un réducteur d'oxydes d'azote dans un réservoir (18) de stockage du véhicule, et/ou
- d'une température de l'unité de traitement (17) des gaz d'échappement du véhicule par réduction catalytique sélective des oxydes d'azote, et/ou
- d'un état d'amorçage de l'unité de traitement (16) des gaz d'échappement par oxydation catalytique.

2. Procédé de gestion selon la revendication 1, dans lequel le débit d'air est augmenté en priorisant une admission de gaz d'échappement recyclés si le niveau de liquide précurseur d'un réducteur d'oxydes d'azote dans le réservoir (18) de stockage du véhicule est inférieur à un niveau prédéterminé.

3. Procédé de gestion selon l'une des revendications précédentes, dans lequel le débit d'air est augmenté en priorisant une admission de gaz d'échappement recyclés si la température de l'unité de traitement (17) des gaz d'échappement à réduction catalytique sélective est inférieure à une température prédéterminée, telle que 200°C.

4. Procédé de gestion selon la revendication précédente, comprenant une étape de mesure de température en un point particulier d'une ligne d'échappement du véhicule, et comprenant une étape de correction de la température mesurée, en fonction d'une localisation de l'unité de traitement (17) des gaz d'échappement à réduction catalytique sélective le long de la ligne d'échappement par rapport à une localisation du point particulier le long de la ligne d'échappement, pour déterminer si la température de l'unité de traitement (17) des gaz d'échappement à réduction catalytique sélective est inférieure à la température prédéterminée.

5. Procédé de gestion selon l'une des revendications précédentes, dans lequel le débit d'air est augmenté en priorisant une admission de gaz d'échappement recyclés si l'unité de traitement (16) des gaz d'échappement du véhicule par oxydation catalytique est amorcée.

6. Procédé de gestion selon la revendication précédente, dans lequel l'unité de traitement (16) des gaz d'échappement du véhicule par oxydation catalytique est une unité de traitement des gaz d'échappement diesel par oxydation catalytique, et dans lequel le débit d'air est augmenté en priorisant une admission de gaz d'échappement recyclés si une température de l'unité de traitement (16) des gaz d'échappement diesel par oxydation catalytique est supérieure à une température d'amorçage, telle que 150°C.

7. Procédé de gestion selon la revendication précédente, dans lequel la température mesurée est également utilisée et éventuellement corrigée en fonction d'une localisation de l'unité de traitement (16) des gaz d'échappement diesel par oxydation catalytique le long de la ligne d'échappement par rapport à une localisation du point particulier le long de la ligne d'échappement, pour déterminer si la température de l'unité de traitement (16) des gaz d'échappement diesel par oxydation catalytique est supérieure à la température d'amorçage.

8. Procédé de gestion selon l'une des revendications précédentes, dans lequel l'étape d'augmentation du débit d'air en priorisant une admission de gaz d'échappement recyclés est effectuée en ouvrant une vanne (13) de recyclage de gaz d'échappement à plus de 75% de son ouverture maximum, et de préférence en ouvrant la vanne (13) de recyclage de gaz d'échappement à son ouverture maximum.

9. Véhicule automobile comportant un groupe motopropulseur (10) thermique équipé d'un système d'admission en air frais et en gaz d'échappement recyclés, d'une unité de traitement (17) des gaz d'échappement par réduction catalytique sélective des oxydes d'azote et d'une unité de traitement (16) des gaz d'échappement par oxydation catalytique, comprenant et dont le fonctionnement transitoire du groupe motopropulseur (10) est géré par le procédé de l'une des revendications précédentes.

## Patentansprüche

1. Verfahren zum Management des transienten Betriebs eines Antriebsstrangs (10) eines Diesel-Thermalfahrzeugs mit einem Schaltgetriebe, das mit einem Einlasssystem für Frischluft und rückgeführte Abgase, einer Einheit (17) zur Behandlung der Abgase durch selektive katalytische Reduktion von Stickoxiden und einer Einheit (16) zur Behandlung der Abgase durch katalytische Oxidation ausgestattet ist, umfassend die Schritte bestehend aus:
- Erkennen eines Last- und/oder Drehzahlsteigerungsbedarfs,
- Erhöhen einer Ansaugluftdurchflussrate des Antriebsstrangs (10), um den Last- und/oder Drehzahlsteigerungsbedarf zu befriedigen,
und wobei die Luftdurchflussrate erhöht wird, indem ein rückgeführter Abgaseinlass gemäß mindestens:
- eines Vorläuferflüssigkeitsniveaus eines Stickoxidreduzierers in einem Lagertank (18) des Fahrzeugs, und/oder
- einer Temperatur der Abgasbehandlungseinheit (17) des Fahrzeugs durch selektive katalytische Reduktion von Stickoxiden, und/oder
- eines Zündzustands der Abgasbehandlungseinheit (16) durch katalytische Oxidation.

2. Verfahren zum Management nach Anspruch 1, bei dem die Luftdurchflussrate erhöht wird, indem einem Einlass von rückgeführtem Abgas Vorrang eingeräumt wird, wenn der Vorläuferflüssigkeitspegel eines Stickstoffoxid-Reduktionsmittels im Lagertank (18) des Fahrzeugs unter einem vorbestimmten Pegel liegt.

3. Verfahren zum Management gemäß einem der vorhergehenden Ansprüche, bei dem die Luftdurchflußrate erhöht wird, indem einem Einlaß von rückgeführten Abgasen Vorrang eingeräumt wird, wenn die Temperatur der Abgasbehandlungseinheit (17) für die selektive katalytische Reduktion niedriger als eine vorbestimmte Temperatur, wie z.B. 200°C, ist.

4. Verfahren zum Management nach dem vorhergehenden Anspruch, umfassend einen Schritt des Messens der Temperatur an einem bestimmten Punkt einer Abgasleitung des Fahrzeugs, und umfassend einen Schritt des Korrigierens der gemessenen Temperatur in Abhängigkeit von einem Ort der Abgasbehandlungseinheit (17) mit selektiver katalytischer Reduktion entlang der Abgasleitung relativ zu einem Ort des bestimmten Punktes entlang der Abgasleitung, um zu bestimmen, ob die Temperatur der Abgasbehandlungseinheit (17) mit selektiver katalytischer Reduktion unter der vorbestimmten Temperatur liegt.

5. Verfahren zum Management gemäß einem der vorhergehenden Ansprüche, bei dem die Luftdurchflussrate erhöht wird, indem einem Einlass von rückgeführtem Abgas Vorrang eingeräumt wird, wenn die Abgasbehandlungseinheit (16) für Fahrzeuge zur katalytischen Oxidation eingeleitet wird.

6. Verfahren zum Management nach dem vorhergehenden Anspruch, wobei die katalytische Oxidation-Fahrzeugabgasbehandlungseinheit (16) eine katalytische Oxidation-Dieselabgasbehandlungseinheit ist, und wobei die Luftdurchflußrate erhöht wird, indem einem Einlaß von rückgeführtem Abgas Vorrang eingeräumt wird, wenn eine Temperatur der katalytischen Oxidation-Dieselabgasbehandlungseinheit (16) höher als eine Ansaugtemperatur, wie beispielsweise 150°C, ist.

7. Verfahren zum Management nach dem vorhergehenden Anspruch, wobei die gemessene Temperatur auch als eine Funktion einer Stelle der katalytischen Oxidations-Diesel-Abgasbehandlungseinheit (16) entlang der Abgasleitung relativ zu einer Stelle des bestimmten Punktes entlang der Abgasleitung verwendet und gegebenenfalls korrigiert wird, um zu bestimmen, ob die Temperatur der katalytischen Oxidations-Diesel Abgasbehandlungseinheit (16) höher als die Zündtemperatur ist. Verfahren zum

8. Verfahren zum Management gemäß einer der vorstehenden Behauptungen, wobei der Schritt des Erhöhens des Luftstroms durch Priorisieren eines Einlasses von rückgeführtem Abgas durch Öffnen eines Abgasrückführungsventils (13) auf mehr als 75% seiner maximalen Öffnung und vorzugsweise durch Öffnen des Abgasrückführungsventils (13) auf seine maximale Öffnung durchgeführt wird.

9. Kraftfahrzeug mit einem thermischen Antriebsstrang (10), der mit einem Ansaugsystem für Frischluft und rezyklierte Abgase ausgestattet ist, einer Einheit (17) zur Behandlung der Abgase durch selektive katalytische Reduktion von Stickoxiden und einer Einheit (16) zur Behandlung der Abgase durch katalytische Oxidation, die eine Einheit (16) zur Behandlung der Abgase durch katalytische Oxidation umfasst und deren vorübergehender Betrieb des Antriebsstrangs (10) durch das Verfahren eines der vorhergehenden Ansprüche gesteuert wird.

## Claims

1. A management method transient operation of a powertrain (10) of a diesel thermal vehicle with manual gearbox equipped with an intake system for fresh air and recycled exhaust gases, a unit (17) for treating the exhaust gases by selective catalytic reduction of nitrogen oxides and a unit (16) for treating the exhaust gases by catalytic oxidation, comprising the steps consisting of:
- detecting a load and/or rpm increase demand,
- increasing an intake air flow rate of the power train (10) to satisfy the load and/or rpm increase demand,
and wherein the air flow rate is increased by prioritizing a recirculated exhaust gas intake according to at least:
- of a precursor liquid level of a nitrogen oxide reducer in a storage tank (18) of the vehicle, and/or
- of a temperature of the exhaust gas treatment unit (17) of the vehicle by selective catalytic reduction of nitrogen oxides, and/or
- of an ignition state of the exhaust gas treatment unit (16) by catalytic oxidation.

2. A management method according to claim 1, wherein the air flow rate is increased by prioritizing an intake of recirculated exhaust gas if the precursor liquid level of a nitrogen oxide reductant in the storage tank (18) of the vehicle is below a predetermined level.

3. A management method according to one of the preceding claims, in which the air flow rate is increased by prioritizing an intake of recycled exhaust gases if the temperature of the selective catalytic reduction exhaust gas treatment unit (17) is lower than a predetermined temperature, such as 200°C.

4. A management method according to the preceding claim, comprising a step of measuring temperature at a particular point of an exhaust line of the vehicle, and comprising a step of correcting the measured temperature, depending on a location of the selective catalytic reduction exhaust gas treatment unit (17) along the exhaust line relative to a location of the particular point along the exhaust line, to determine whether the temperature of the selective catalytic reduction exhaust gas treatment unit (17) is below the predetermined temperature.

5. A management method according to one of the preceding claims, wherein the airflow rate is increased by prioritizing an intake of recycled exhaust gas if the catalytic oxidation vehicle exhaust gas treatment unit (16) is initiated.

6. A management method according to the preceding claim, wherein the catalytic oxidation vehicle exhaust gas treatment unit (16) is a catalytic oxidation diesel exhaust gas treatment unit, and wherein the air flow rate is increased by prioritizing an intake of recirculated exhaust gas if a temperature of the catalytic oxidation diesel exhaust gas treatment unit (16) is higher than a priming temperature, such as 150°C.

7. A management method according to the preceding claim, wherein the measured temperature is also used and optionally corrected as a function of a location of the catalytic oxidation diesel exhaust gas treatment unit (16) along the exhaust line relative to a location of the particular point along the exhaust line, to determine whether the temperature of the catalytic oxidation diesel exhaust gas treatment unit (16) is higher than the ignition temperature.

8. A management method according to one of the foregoing claims, wherein the step of increasing air flow by prioritizing an intake of recirculated exhaust gas is performed by opening an exhaust gas recirculation valve (13) to more than 75% of its maximum opening, and preferably by opening the exhaust gas recirculation valve (13) to its maximum opening.

9. Motor vehicle comprising a thermal power train (10) equipped with an intake system for fresh air and recycled exhaust gases, a unit (17) for treating the exhaust gases by selective catalytic reduction of nitrogen oxides and a unit (16) for treating the exhaust gases by catalytic oxidation, comprising and whose transient operation of the power train (10) is managed by the process of one of the preceding claims.
